(19)

Europäisches
Patentamt
European
Patent Office
Office européen
des brevets

(11) **EP 2 071 477 A1**

(12) **EUROPEAN PATENT APPLICATION**

(43) Date of publication:
**17.06.2009 Bulletin 2009/25**

(51) Int Cl.:
**G06F 17/30** *(2006.01)*

(21) Application number: **08161269.9**

(22) Date of filing: **28.07.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **12.12.2007 KR 20070129155**

(71) Applicant: **Electronics and Telecommunications
Research
Institute
Daejeon (KR)**

(72) Inventors:
  • **Kim, Eun Young
    Daejeon (KR)**
  • **Yun, Young Tae
    Daejeon (KR)**
  • **Park, Eung Ki
    Daejeon (KR)**

(74) Representative: **Betten & Resch
Patentanwälte
Theatinerstrasse 8
(Fünf Höfe)
80333 München (DE)**

(54) **System and method for searching for document based on policy**

(57)    Provided is a system and method for searching for a document based on a policy, The system includes: a document database for storing document files; a document format and text filer for extracting document format information and text information from a document newly stored in the document database; a document format policy module for setting a document format search policy according to an instruction from an administrator; a document text policy module for setting a document text search policy according to an instruction from the administrator; a document format information search module for searching for a document having a document format matching the set document format search policy in the document database; and a document text information search module for searching for a document having a text matching the set document text search policy in the document database.

FIG. 1

**Description**

CROSS-REFERENCE TO RELATED APPLICATION

This application claims priority to and the benefit of Korean Patent Application No. 2007-129155, filed December 12, 2007, the disclosure of which is incorporated herein by reference in its entirety.

BACKGROUND

**1. Field of the Invention**

The present invention relates to a system and method for searching for documents, and more particularly, to a system and method for searching for document format and text information based on a search policy set by an administrator.

**2. Discussion of Related Art**

Conventional document search or categorization systems mainly employ a machine learning mechanism of the Artificial Intelligence (AI) field. In general, a supervised learning mechanism using learning data to which category information has already been attached is most frequently used. It is known that the performance of a document categorization system is enhanced when a conventional learning algorithm is used. However, to have the enhanced performance, a sufficient amount of learning data must be manually categorized by a person. In addition, a user can not search for a specific document format that he/she wants using such document categorization technology.

Conventional web services of searching for a document through Internet may be roughly classified into two types. One is a classified-list type such as Yahoo, and the other is a query-based engine type such as Altavista, HotBot, etc., which is more general. Both types have databases including reproduction of some webpages or other resources. A classified-list-type categorization method provides systematic sorting categories or the arrangement of resources linked in very complex layers. A query-based engine operates according to a search algorithm based on text input by a user. In general, the classified-list type also may support search based on queries about a category name and a resource name, and the query-based engine service also may provide categorized results. However, both types merely perform fragmentary search based on keyword or link information.

SUMMARY OF THE INVENTION

The present invention is directed to providing a system and method for enabling an administrator or user to more thoroughly search for a desired document according to a search policy based on document format and text information not included in a conventional document search system.

One aspect of the present invention provides a system for searching for a document based on a policy, the system including: a document database for storing document files; a document format and text filer for extracting document format information and text information from a document newly stored in the document database and adding the extracted information to the document database; a document format policy module for setting a document format search policy according to an instruction from an administrator; a document text policy module for setting a document text search policy according to an instruction from the administrator; a document format information search module for searching for a document having a document format matching the set document format search policy in the document database; and a document text information search module for searching for a document having a text matching the set document text search policy in the document database.

Another aspect of the present invention provides a method of searching for a document based on a policy, the method including: receiving at least one of a document format search policy and a text search policy from an administrator; monitoring whether or not a new document is stored in a document database; when the new document is stored, extracting document format information and text information from the new document and adding the extracted information to the document database; and searching for a document having at least one of document format information and text information matching the search policy in the document database.

BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:

FIG. 1 is a block diagram of a policy-based document search system according to an exemplary embodiment of the present invention;

FIG. 2 illustrates examples of a format document and a text document generated from a document sample by a document format and text filter according to an exemplary embodiment of the present invention;

FIG. 3 illustrates an example of a document format policy set on the basis of a format file by a document format policy setting module according to an exemplary embodiment of the present invention;

FIG. 4 illustrates an example of a document text policy set on the basis of a text file by a document text policy setting module according to an exemplary embodiment of the present invention; and

FIG. 5 is a flowchart showing a method of searching for a document based on a policy according to an exemplary embodiment of the present invention.

## DETAILED DESCRIPTION OF EXEMPLARY EMBODIMENTS

Hereinafter, exemplary embodiments of the present invention will be described in detail. However, the present invention is not limited to the embodiments disclosed below, but can be implemented in various forms. The following embodiments are described in order to enable those of ordinary skill in the art to embody and practice the present invention.

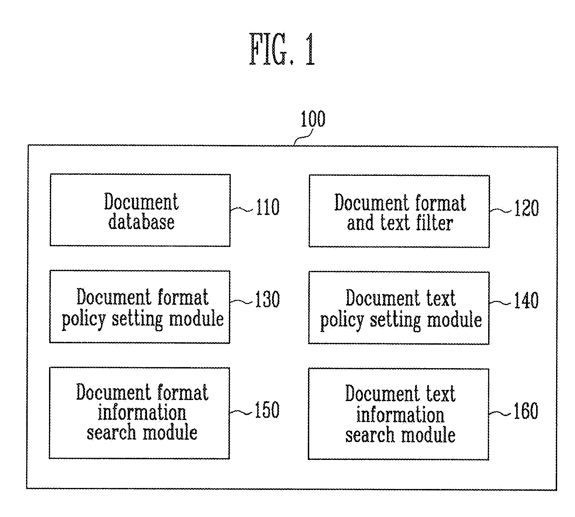

FIG. 1 is a block diagram of a policy-based document search system according to an exemplary embodiment of the present invention. The document search system 100 extracts format and text information from a document, which may be collected online; compares the extracted information with format and text information set by an administrator; and provide the result to the administrator or a user. The document search system 100 includes a document database 110, a document format and text filter 120, a document format policy setting module 130, a document text policy setting module 140, a document format information search module 150 and a document text information search module 160.

The document database 110 stores document files of various formats, which are collected online. Types of document files collected according to an exemplary embodiment of the present invention may be HWP 3.x, Wordian, 2000 and later; Microsoft Word 95, 97, 2000 and XP; Microsoft Powerpoint 95, 97, 2000 and XP; Microsoft Excel 95, 97, 2000 and XP; Haansoft Hangul 2.x, 3.x, 96, 97, Wordian and 2002; Adobe Acrobat 4.x and 5.x (supporting Portable Document Format (PDF) 1.x); Rich Text Format (RTF); Handysoft Arirang (HWD); a Hypertext Markup Language (HTML) document; a Mime HTML (MHT) document; a text document; a Moving Picture Experts Group (MPEG) layer 3 (MP3) tag; a ZIP file; an OpenOffice document file; and so on. However, the present invention is not limited to these document files.

The document format and text filter 120 extracts format information and text information from a document stored in the document database 110; generates a format file containing the extracted format information and a text file containing the extracted text information; and adds the extracted information in the document database. The document format information contained in the format file may include a document title, a writer, header/footer information, page number, and so on. The text information contained in the text file includes text information in the body of the document.

The document format policy setting module 130 sets, modifies and deletes a document format search policy according to an instruction from the administrator, and the document text policy setting module 140 sets, modifies and deletes a text search policy.

The document format information search module 150 searches for a document having document format matching the document format search policy set by the administrator, in the document database, and then provides the search result to the administrator. The document text information search module 160 searches for a document matching the text search policy set by the administrator and then provides the search result to the administrator. Although not shown in FIG. 1, the document search system 100 includes a display that shows the search results of the document format information search module 150 and the document text information search module 160 to the administrator.

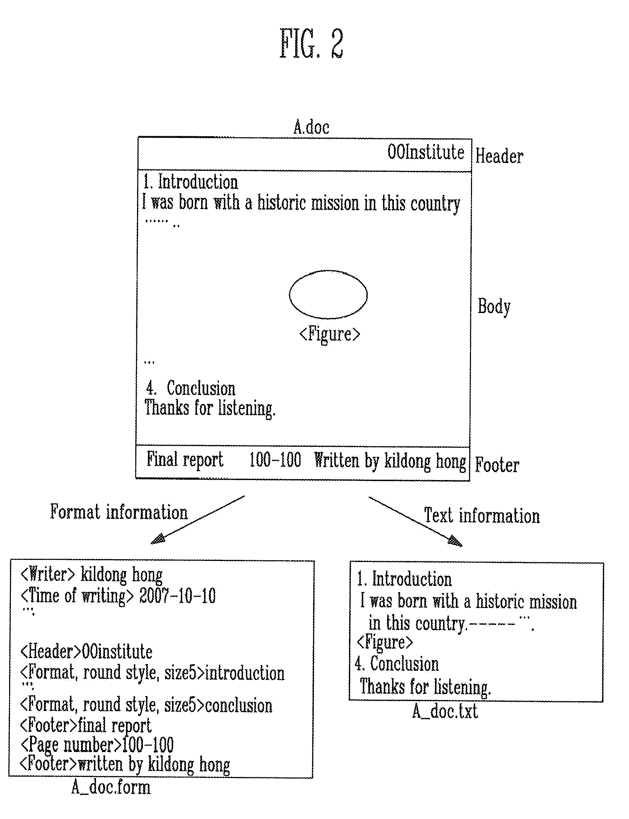

The main modules will be described in further detail below with reference to FIGS. 2 to 4.

FIG. 2 illustrates examples of a format document and a text document generated from a document sample by the document format and text filter 120 according to an exemplary embodiment of the present invention. A document sample "A.doc" is an actual document in a widely-used format. Assume that the document contains text, a figure, a table, etc., in its body and also contains a header/footer and a page number.

The document format and text filter 120 stores document format information, such as <header>, <format...>, <footer>, <page number>, etc., on the document "A.doc," together with basic information on a writer, a time of writing, etc., of the document, in a file "A_doc.form," which is a format file. In addition, information on the entire text, such as "1. Introduction...", included in the body, is stored in a file "A_doc.txt", which is a text file.

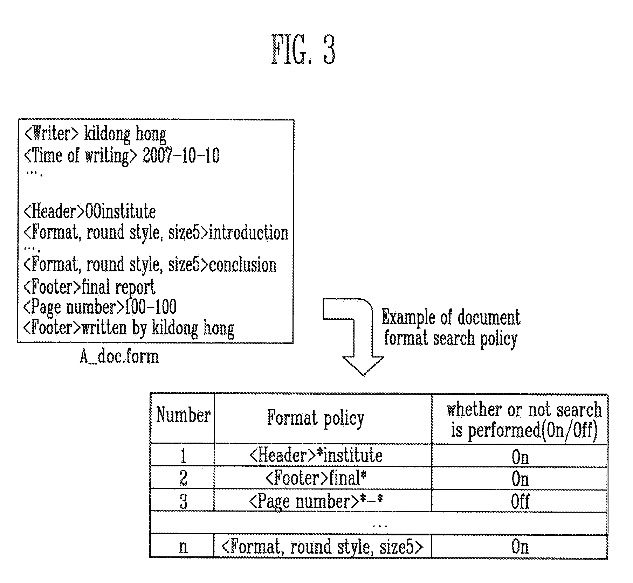

FIG. 3 illustrates an example of a document format policy set on the basis of a format file "A_doc.form" by the document format policy setting module 130 according to an exemplary embodiment of the present invention. An administrator may set a policy through the document format policy setting module 130 on the basis of all information that can be included in format information. For example, when a search policy is set to "<header>*institute", a document having the word "institute" in a <header> section is searched for. When a search policy is set to "<footer>final*", a document having the word "final" in a <footer> section is searched for. When a search policy is set to "<page number>*-*", a document having the character "-" in a <page number> section is searched for. When a search policy is set to "<format, round style, size5>", a document having characters written in a round style and having a size of 5 is searched for. In addition, it may be indicated whether or not a search is performed on the basis of respective search policies, as illustrated in FIG. 3.

An example of a document type that can be set by the document format policy setting module 130 is shown in a table below.

[Table 1]

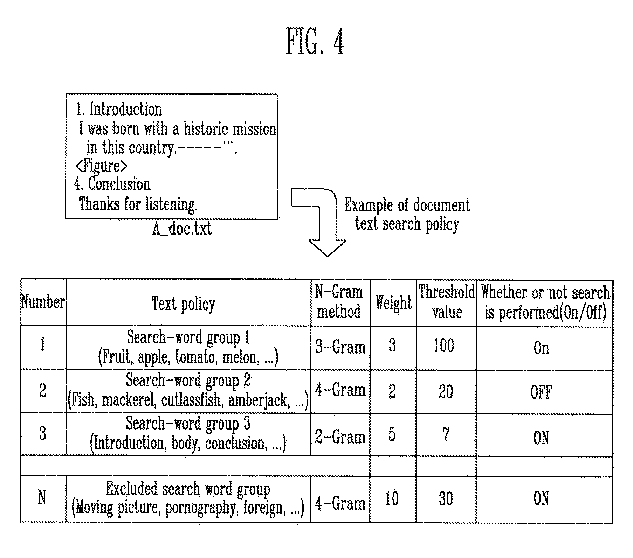

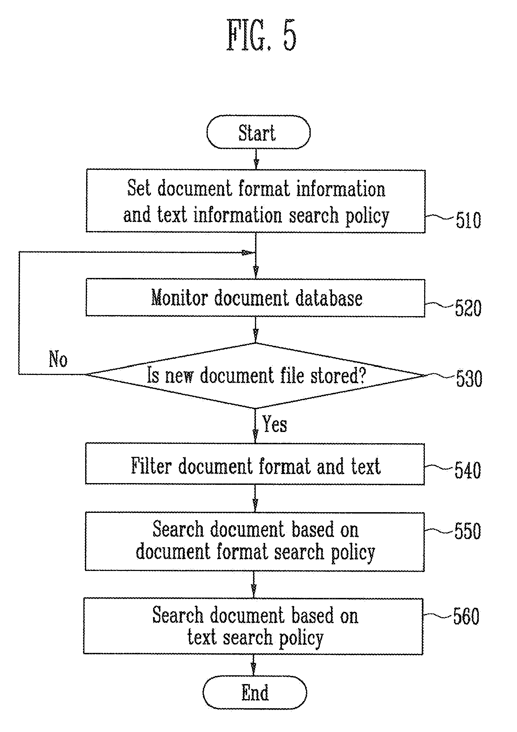

| Classification | List |
|---|---|
| Types of format policy | <header>, <footer>, <page number>, <format>, <background>, <page frame>, <quotation>, <equation>, <cross reference>, <correction code>, <table of contents>, <paragraph>, <file path>, <bookmark>, <footnote>, <sidenote>, and so on |
| Combinable character | *, ? |
| Example | <header>* institute <background>?empty? <page number>*-* |

FIG. 4 illustrates an example of a document text policy set on the basis of a text file "A_doc.txt" by the document text policy setting module 140 according to an exemplary embodiment of the present invention. Text policy 1 is set to perform search on the basis of a search-word group 1 (fruit, apple, tomato, melon, ...) using a 3-gram method, "n-gram" denotes n adjacent syllables (characters). An n-gram based indexing method applies a word-unit indexing method to each word in a sentence, applies an n-gram method to segments generated by the word-unit indexing method, and thereby extracts index words. For example, from a word "정보검색", 2-gram-based indexing method extracts index words "정보", "보검" and "검색". In addition, a weight and a threshold value are each set to 3 and 100 in text policy 1, which means that search-word matching is performed on the basis of the corresponding search-word using the 3-gram method to add a weight of 3 every time the corresponding keyword matches a document, and the document matches the corresponding search policy when the total weight is larger than 100. When text policy 3 is applied to a document "A_doc.txt", the corresponding text weight is calculated using the following equation:

[Equation 1]

$$TotalWeight = \sum_{i=0}^{n} KeyWordCount_i \times KeyWordWeight$$

$$KeyWordCount \quad = \quad KeyWordCount_1, KeyWordCount_2,$$

$$..., KeyWordCount_n //Keyword\ Frequency.$$

1. Introduction → 5 points

I was born with a historical mission in this country.-----....
<Figure>
4. Conclusion → 5 points
Thanks for listening.
→ total weight 10 points (threshold value: 7 points)
Since the total weight is 10, the corresponding document matches text policy 3 of which the threshold value is 7. A table below is an example of a policy that can be set using the document text policy setting module 140 according to an exemplary embodiment of the present invention.

[Table 2]

| Text policy classification | Valid value |
|---|---|
| Search-word group | Search-word group 1 (pencil, automatic pencil, eraser, ...) Search-word group 2 (ruler, cutter, scissors, ...) |
| Search-word application method | n-Gram method (n = 1, 2, 3, 4, 5, ...) |
| Keyword weight | $1 \sim \infty$ |
| Document threshold value | $1 \sim \infty$ |
| Example | Search-word group 1, 2-Gram, 3, 20 |

FIG. 5 is a flowchart showing a method of searching for a document based on a policy according to an exemplary embodiment of the present invention. As illustrated, at least one of a document format search policy and a text search policy is received from an administrator to set a search policy (step 510). The search policy may be set on the basis of document format and text information extracted from sample documents.

A document database is monitored (step 520), and it is determined whether or not a new file is stored in the document database (step 530).

When a new document file is stored in the document database, document format and text information is extracted from the new document and is further added to the document database (step 540).

A document having text format information matching the set document format search policy is searched for in the document database (step 550).

In a similar way, a document having text information matching the set text search policy is searched in the document database (step 560).

The search result is provided to the administrator, and thus the administrator can actively and constantly complement previously set document format and text search policies.

According to the present invention, since the present invention can automatically extract format and text information from a document and perform document search according to a search policy based on document format and text set by an administrator, it enables the administrator to more thoroughly search for a desired document.

While the invention has been shown and described with reference to certain exemplary embodiments thereof, it will be understood by those skilled in the art that various changes in form and details may be made therein without departing from the spirit and scope of the invention as defined by the appended claims.

**Claims**

1.  A system for searching for a document based on a policy, comprising:

    a document database for storing document files;
    a document format and text filer for extracting document format information and text information from a document newly stored in the document database and adding the extracted information to the document database;
    a document format policy module for setting a document format search policy according to an instruction from an administrator;
    a document text policy module for setting a document text search policy according to an instruction from the administrator;
    a document format information search module for searching for a document having a document format matching the set document format search policy in the document database; and
    a document text information search module for searching for a document having a text matching the set document text search policy in the document database.

2.  The system of claim 1, further comprising:

    a display for providing a search result of the document format information search module and the document text information search module to the administrator.

3.  The system of claim 1 or 2, wherein the document format policy module sets a document format search policy based on at least one of a header, footer, page number, format, background, page frame, quotation, equation, cross reference, correction code, table of contents, paragraph, file path, bookmark, footnote, and sidenote.

4. The system of claim 1 or 2, wherein the document text policy module sets a document text search policy based on at least one of a search word group, search word application method, keyword weight, and document threshold value.

5. A method of searching for a document based on a policy, comprising:

receiving at least one of a document format search policy and a text search policy from an administrator;
monitoring whether or not a new document is stored in a document database;
when the new document is stored, extracting document format information and text information from the new document and adding the extracted information to the document database; and
searching for a document having at least one of document format information and text information matching the search policy in the document database.

6. The method of claim 5, further comprising:

providing a document search result obtained from the document database to the administrator.

7. The method of claim 5 or 6, wherein the search policy is set by the administrator on the basis of document format information and text information extracted from a sample document.

8. The method of claim 5 or 6, wherein the document format search policy includes a search policy based on at least one of a header, footer, page number, format, background, page frame, quotation, equation, cross reference, correction code, table of contents, paragraph, file path, bookmark, footnote, and sidenote.

9. The method of claim 5 or 6, wherein the text search policy includes a search policy based on at least one of a search-word group, search-word application method, keyword weight, and document threshold value.

# FIG. 1

100

| | |
|---|---|
| Document database ~110 | Document format and text filter ~120 |
| Document format policy setting module ~130 | Document text policy setting module ~140 |
| Document format information search module ~150 | Document text information search module ~160 |

# FIG. 2

A.doc

| | |
|---|---|
| OOInstitute | Header |
| 1. Introduction<br>I was born with a historic mission in this country<br>...... ..<br><br><br><Figure><br><br>...<br><br>4. Conclusion<br>Thanks for listening. | Body |
| Final report    100-100   Written by kildong hong | Footer |

Format information          Text information

<Writer> kildong hong
<Time of writing> 2007-10-10
...;

<Header>OOinstitute
<Format, round style, size5>introduction
...;
<Format, round style, size5>conclusion
<Footer>final report
<Page number>100-100
<Footer>written by kildong hong

A_doc.form

1. Introduction
 I was born with a historic mission
   in this country.----- ...
<Figure>
4. Conclusion
 Thanks for listening.

A_doc.txt

# FIG. 3

```
<Writer> kildong hong
<Time of writing> 2007-10-10
... .

<Header>OOinstitute
<Format, round style, size5>introduction
... .
<Format, round style, size5>conclusion
<Footer>final report
<Page number>100-100
<Footer>written by kildong hong
```

A_doc.form

Example of document
format search policy

| Number | Format policy | whether or not search is performed(On/Off) |
|--------|---------------|-------------------------------------------|
| 1 | <Header>*institute | On |
| 2 | <Footer>final* | On |
| 3 | <Page number>*-* | Off |
| ... | | |
| n | <Format, round style, size5> | On |

# FIG. 4

1. Introduction
I was born with a historic mission
in this country.----- ""'.
<Figure>
4. Conclusion
Thanks for listening.

A_doc.txt

Example of document
text search policy

| Number | Text policy | N-Gram method | Weight | Threshold value | Whether or not search is performed(On/Off) |
|--------|-------------|---------------|--------|-----------------|-------------------------------------------|
| 1 | Search-word group 1 (Fruit, apple, tomato, melon, ...) | 3-Gram | 3 | 100 | On |
| 2 | Search-word group 2 (Fish, mackerel, cutlassfish, amberjack, ...) | 4-Gram | 2 | 20 | OFF |
| 3 | Search-word group 3 (Introduction, body, conclusion, ...) | 2-Gram | 5 | 7 | ON |
| | | | | | |
| N | Excluded search word group (Moving picture, pornography, foreign, ...) | 4-Gram | 10 | 30 | ON |

# FIG. 5

```
                    ( Start )
                       │
                       ▼
        ┌──────────────────────────────┐
        │  Set document format information │──── 510
        │  and text information search policy│
        └──────────────────────────────┘
                       │
          ┌────────────▶│
          │            ▼
          │  ┌──────────────────────────┐
          │  │  Monitor document database │──── 520
          │  └──────────────────────────┘
          │            │
      No  │            ▼
          │       ╱─────────────────╲
          └──────  Is new document file stored? ──── 530
                   ╲─────────────────╱
                       │ Yes
                       ▼
        ┌──────────────────────────────┐
        │   Filter document format and text │──── 540
        └──────────────────────────────┘
                       │
                       ▼
        ┌──────────────────────────────┐
        │     Search document based on     │──── 550
        │     document format search policy │
        └──────────────────────────────┘
                       │
                       ▼
        ┌──────────────────────────────┐
        │     Search document based on     │──── 560
        │       text search policy         │
        └──────────────────────────────┘
                       │
                       ▼
                    ( End )
```

Europäisches
Patentamt

European
Patent Office

Office européen
des brevets

# EUROPEAN SEARCH REPORT

Application Number

EP 08 16 1269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/088313 A1 (TORRES JOSE [US]) 6 May 2004 (2004-05-06) * abstract; figures 1B,3-5 * * paragraph [0008] - paragraph [0010] * * paragraph [0026] - paragraph [0037] * * paragraph [0054] - paragraph [0058] * * paragraph [0074] * ----- | 1-9 | INV. G06F17/30 |
| X | SOMCHAI CHATVICHIENCHAI ET AL: "An Effective and Secure Search of Office Documents" DATABASE AND EXPERT SYSTEMS APPLICATIONS, 2007. DEXA '07. 18TH INTERNATIONAL CONFERENCE ON, IEEE, PISCATAWAY, NJ, USA, 1 September 2007 (2007-09-01), pages 789-793, XP031136548 ISBN: 978-0-7695-2932-5 * the whole document * ----- | 1-9 | |
| X | US 2005/132070 A1 (REDLICH RON M [US] ET AL) 16 June 2005 (2005-06-16) * abstract; figures 4,5 * * paragraphs [0273], [0278] * * paragraph [0408] - paragraph [0409] * ----- | 1-9 | TECHNICAL FIELDS SEARCHED (IPC) G06F |
| A | US 2007/157203 A1 (LIM KENG [US]) 5 July 2007 (2007-07-05) * the whole document * ----- | 1-9 | |

The present search report has been drawn up for all claims

| Place of search | Date of completion of the search | Examiner |
|---|---|---|
| Berlin | 2 February 2009 | Nazzaro, Antonio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 16 1269

This annex lists the patent family members relating to the patent documents cited in  the above-mentioned European search report.
The members are as contained in the European Patent Office EDP file on
The European Patent Office is in no way liable for these particulars which are merely given for the purpose of information.

02-02-2009

| Patent document cited in search report | | Publication date | Patent family member(s) | | Publication date |
|---|---|---|---|---|---|
| US 2004088313 | A1 | 06-05-2004 | WO | 03040963 A1 | 15-05-2003 |
| US 2005132070 | A1 | 16-06-2005 | US | 2005138109 A1 | 23-06-2005 |
| | | | US | 2005138110 A1 | 23-06-2005 |
| US 2007157203 | A1 | 05-07-2007 | US | 2008083014 A1 | 03-04-2008 |
| | | | US | 2008294586 A1 | 27-11-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2007129155